# EUROPEAN PATENT APPLICATION

(11) **EP 3 989 054 A1**
(43) Date of publication of application: **27.04.2022**
(21) Application number: 19934322.9
(22) Date of filing: 05.11.2019
(51) Int. Cl.: G06F 3/14, G06Q 50/10, A41D 1/00, A41D 27/08

(54) **SYSTEM AND METHOD FOR GARMENT OR FASHION ITEM ATTACHMENT DISPLAY**

(30) Priority: 18.06.2019 KR 20190072078
(71) Applicant: Kinsight Co., Ltd., Gyeonggi-do 13610 (KR)
(72) Inventor: KI, Gwang Ho, Seongnam-si, Gyeonggi-do 13611 (KR)
(74) Representative: Zimmermann, Tankred Klaus
(86) International application number: PCT/KR2019/014914
(87) International publication number: WO 2020/256232

(57) **Abstract**

Disclosed are a system and a method for a garment or fashion item attachment display. The system comprises: a display device which is attached to a garment or a fashion item; and a user terminal which performs short range communication with the display device and controls predetermined digital content to display the content through the display device. According to the above-described system and method for a garment or fashion item attachment display, an image, a moving image (including a video), or a wording controlled by a user terminal is displayed through a display attachable to a garment or a fashion item, so that a user can show what he/she wants to express according to situations. In particular, a display is attached to or detached from a garment or a fashion item by using Velcro, so that washing and management can be easily performed. In addition, a unique NFC tag is inserted into or attached to a bag or a cap, and a display device is configured to recognize the tag, so that a predetermined or pre-matched image or wording for the particular bag or cap can be easily displayed.

## Description

### [Technical Field]

The present disclosure relates to a display, and specifically, to a system and a method for a garment or fashion item attachment display.

### [Background Art]

Digital contents are designed and displayed on a display attached to a garment or a fashion item. The digital contents include various images (videos included), design patterns, patterns, wordings, or the like.

There is a case where a user wants to display desired digital contents on the garment or the fashion item, as necessary. For example, the user may get tired of the design patterns or the patterns or want to express different designs or wordings according to situations. More specifically, when the user goes to a baseball field, there is a case where the user wants to display a team logo, a team picture, or image for cheering on a specific team on his/her cap. There is also a case where the user intends to display different team logos for each baseball team and basketball team.

As described above, there is the need for a means capable of displaying different designs through the digital contents.

### [Summary of Invention]

### [Technical Problem]

An object of the present disclosure is to provide a system for a garment or fashion item attachment display.

Another object of the present disclosure is to provide a method for a garment or fashion item attachment display.

### [Solution to Problem]

A system for a garment or fashion item attachment display according to the object of the present disclosure may be configured to include a display device attached to a garment or a fashion item; and a user terminal configured to perform short range communication with the display device, and to control predetermined digital contents to be displayed through the display device.

Here, the system may be configured such that the garment or the fashion item includes clothes, bags/caps, shoes, and accessories, and the digital contents include images (videos included), design patterns, patterns, and wordings.

Further, the user terminal may control still images or moving images to be displayed through the display device.

A method for a garment or fashion item attachment display according to another object of the present disclosure may be configured to include performing, by a user terminal, short range communication with a display device attached to a garment or a fashion item; controlling, by the user terminal, predetermined digital contents to be displayed through the display device; and displaying, by the display device, the digital contents according to a control of the user terminal.

Here, the digital contents may be composed of still images or moving images.

### [Advantageous Effects of Invention]

The aforementioned system and method for the garment or fashion item attachment display may be configured to display images or wordings controlled by the user terminal through the display attachable to the garment or the fashion item, thereby displaying what the user wants to express according to situations.

Particularly, it is possible to facilitate washing and management by allowing the display to be attached to or detached from the garment or the fashion item using the Velcro or the attachable or detachable form.

Further, the unique NFC tag may be inserted into or attached to the system for the garment or fashion attachment display and the user terminal may be configured to recognize the NFC tag, thereby easily displaying the predetermined or pre-matched images or wordings for each specific bag or cap.

### [Brief Description of Drawings]

FIGS. 1 and 2 are diagrams exemplarily illustrating a garment or fashion item attachment display according to an exemplary embodiment of the present disclosure.
FIG. 3 is a block diagram of a system for the garment or fashion item attachment display according to the exemplary embodiment of the present disclosure.
FIG. 4 is a flowchart of a method for the garment or fashion item attachment display according to the exemplary embodiment of the present disclosure.

### [Description of Embodiments]

Since the present disclosure may be variously changed and have various embodiments, specific embodiments will be illustrated in the drawings and explained in detail in a detailed description for carrying out the disclosure. However, this is not intended to limit the present disclosure to a particular disclosed form, and should be understood to include all changes, equivalents, and substitutes included in the spirit and scope of the present disclosure. Similar reference numerals are used for similar components in describing each drawing.

Terms such as first, second, A, and B may be used to describe various components, but the components should not be limited by the terms. The terms are used only for the purpose of distinguishing one component from another. For example, without departing from the scope of the present disclosure, the first component may be named a second component, and similarly, the second component may also be named the first component. Terms such as and/or include a combination of a plurality of related and described items or any of the plurality of related and described items.

When a component is referred to as being "connected" or "coupled" to another component, it may be directly connected or coupled to another component, but it should be understood that other components may also be present therebetween. On the other hand, when a component is referred to as being "directly connected" or "directly coupled" to another component, it should be understood that there are no other components therebetween.

The terminology used in the present application is merely for the purpose of describing particular embodiments, and is not intended to limit the present disclosure. The singular expression may include plural expression unless the phrases clearly indicate the opposite. In the present application, it should be understood that the term "comprising", "having", or the like specifies the presence of the characteristic, integer, step, operation, component, part, or a combination thereof described in the specification, and does not exclude the presence or addition possibility of one or more other characteristics, integers, steps, operations, components, parts or combinations thereof in advance.

Unless defined otherwise, all terms including technical or scientific terms used herein have the same meaning as commonly understood by those skilled in the art to which the present disclosure pertains. Terms like those defined in the dictionary commonly used should be interpreted to have a meaning consistent with the meaning in the context of the related technology, and are not interpreted in an ideal or very formal sense, unless clearly defined in the present application.

Hereinafter, a preferred exemplary embodiment of the present disclosure will be described in detail with reference to the accompanying drawings.

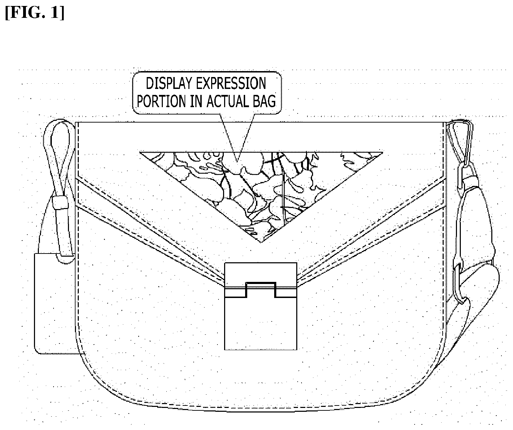

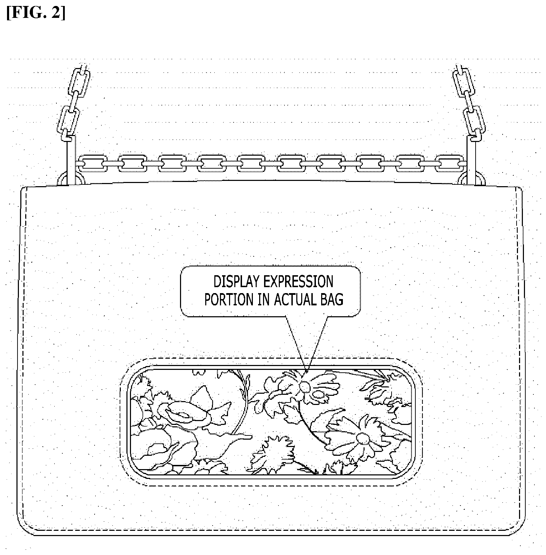

FIGS. 1 and 2 are diagrams exemplarily illustrating a garment or fashion item attachment display according to an exemplary embodiment of the present disclosure.

FIGS. 1 and 2 illustrate that a garment or fashion item attachment display device 200 is attached to change and display various images and wordings. A user may display desired images and wordings according to various situations or feelings.

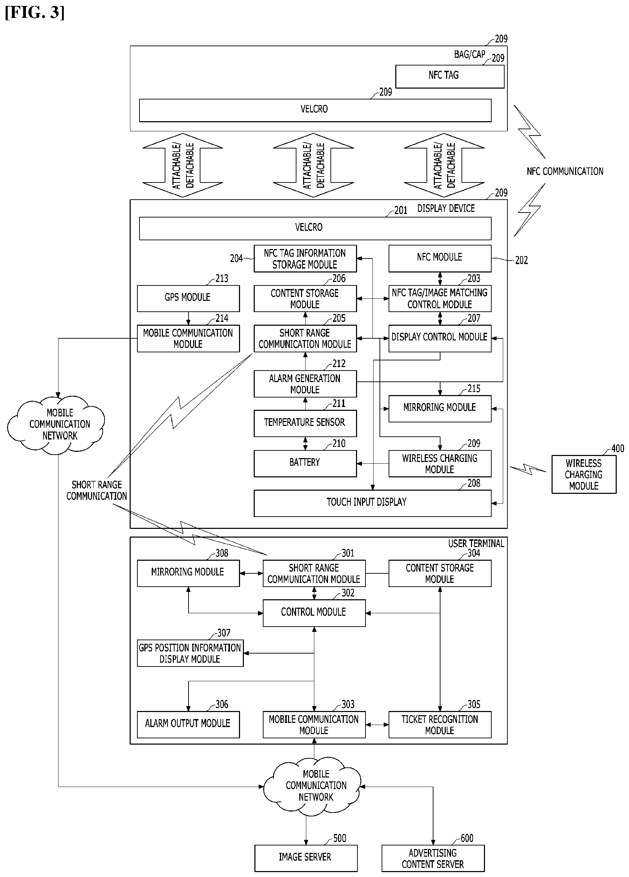

FIG. 3 is a block diagram of a system for a garment or fashion item attachment display according to the exemplary embodiment of the present disclosure.

The exemplary embodiment of the present patent application will be described by substituting a garment or a fashion item with a specific bag/cap 100 in order to specify the description.

Referring to FIG. 3, the system for the garment or fashion item attachment display according to the exemplary embodiment of the present disclosure may be configured to include a bag/cap 100, a display device 200, a user terminal 300, a wireless charging device 400, and an image server 500.

Hereinafter, a detailed configuration will be described.

The bag/cap 100 may be configured to include a Velcro 101 and an NFC tag 102.

Here, the Velcro 101 is a component configured to allow the display device 200 to be attachable to or detachable from the bag/cap 100.

The NFC tag 102 may be configured to include identification information capable of identifying each bag/cap 100.

The display device 200 as a display attachable to the bag/cap 100 may be formed of a rigid display or a flexible display. As a specific type thereof, a display panel capable of displaying digital contents, such as a TFT LCD, an LED, an OLED, a QLED, or a Micro LED, may be used.

The display device 200 may be configured to include a Velcro 201, an NFC module 202, an NFC tag/image matching control module 203, an NFC tag information storage module 204, a short range communication module 205, a content storage module 206, a display control module 207, a touch input display 208, a wireless charging module 209, a battery 210, a temperature sensor 211, an alarm generation module 212, a GPS module 213, a mobile communication module 214, and a mirroring module 215. Hereinafter, a specific configuration will be described.

The Velcro 201 is a component configured to attach or detach the display device 200 to or from the Velcro 101 of the bag/cap 100.

The NFC module 202 may be configured to recognize identification information stored in the NFC tag 102 of the bag/cap 100. The user may recognize the identification information by allowing the display device 200 to recognize the NFC tag 102 of the specific bag/cap 100.

The NFC tag/image matching control module 203 may be configured to recognize the bag/cap 100 by comparing the identification information recognized by the NFC module 202 with identification information previously stored in the NFC tag information storage module 204.

Further, the NFC tag/image matching control module 203 may be configured to read and mutually match the contents stored by corresponding to the recognized identification information in advance, that is, images or wordings from the content storage module 206.

The NFC tag information storage module 204 may be configured to store the identification information of each NFC tag 102 in advance.

The short range communication module 205 is a component configured to perform short range communication with the user terminal 300.

The content storage module 206 may be configured to store the contents previously matched with the identification information of the NFC tag 204 in advance or configured to download the digital contents from the image server 500.

The display control module 207 may control the corresponding contents to be displayed through the touch input display 208 according to a matching control of the identification information of the NFC tag/image matching control module 203 and the contents.

The display control module 207 may control pre-matched various contents, that is, designs or wordings to be alternately, sequentially displayed or control specific designs or wordings to be continuously displayed. Such a control may also be performed such that the designs or the wordings are displayed by operating a timer for a predetermined time.

The touch input display 208 may display the contents according to the control of the display control module 207. The touch input display 208 may be configured to have a touch panel embedded therein to enable a touch input of the user.

The wireless charging module 209 may be configured to receive a wireless power from the wireless charging device 400 to charge the battery 210.

Meanwhile, a temperature of the battery 210 may be very high due to the long-term charging and use. The temperature sensor 211 may be configured to always measure the temperature of the battery 210 to predict whether the battery 210 overheats or explodes in advance.

The alarm generation module 212 may be configured to generate a high-temperature alarm when the temperature of the battery 210 measured by the temperature sensor 211 increases to a predetermined standard level or more. The alarm may be transmitted to the user terminal 300 through the short range communication module 205 in real time. Further, the alarm generation module 212 may be configured to generate a room-temperature alarm when the temperature of the battery 210 measured by the temperature sensor 211 decreases to the predetermined standard level or less. The high-temperature alarm and the room-temperature alarm may be transmitted to the user terminal 300 through the short range communication module 205 in real time.

Meanwhile, if the alarm is generated, the alarm generation module 212 may be configured to deliver the high-temperature alarm and the room-temperature alarm to the display control module 207, the wireless charging module 209, and the mirroring module 215, respectively.

When the high-temperature alarm is delivered, the display control module 207 may be configured to stop the display of the contents, the wireless charging module 209 may be configured to stop the wireless charging, and the mirroring module 215 may also be configured to stop the mirroring.

When the room-temperature alarm is delivered, the display control module 207 may be configured to resume the display of the contents, the wireless charging module 209 may be configured to resume the wireless charging, and the mirroring module 215 may also be configured to resume the mirroring.

The GPS module 213 may be configured to measure GPS position information of the display device 200. The GPS module 213 may be configured to transmit the GPS position information to the user terminal 300 through the short range communication module 205 in real time.

The mobile communication module 214 may be configured to transmit the GPS position information measured by the GPS module 213 to the user terminal 300.

The mirroring module 215 is a component configured to perform the mirroring between the display panel on the user terminal 300 and the display device 200. The mirroring module 215 may be configured to output information displayed on the display panel of the user terminal 300 through the touch input display 208 as it is, and to transmit information input by the touch on the touch input display 208 to the user terminal 300 in real time.

The user terminal 300 may be a mobile terminal of the user.

The user terminal 300 may be configured to include a short range communication module 301, a control module 302, a mobile communication module 303, a content storage module 304, a ticket recognition module 305, an alarm output module 306, a GPS position information display module 307, and a mirroring module 308. Hereinafter, a specific configuration will be described.

The short range communication module 301 may perform the short range communication with the display device 200.

The control module 302 may control the contents stored in the content storage module 304 to be transmitted to the display device 200 through the short range communication module 301.

The mobile communication module 303 may be configured to communicate with the image server 500. The control module 302 may be configured to download images desired by the user from the image server 500 through the mobile communication module 303 to store the images in the content storage module 304.

The content storage module 304 may store the contents searched and downloaded from the image server 500 by the user.

The ticket recognition module 305 may be configured to capture and recognize a ticket of a sports game, a concert, a play, or the like through a camera. The ticket recognition module 305 may be configured to search for a cheering team, actor/actress, director, or the like in the ticket on a web, and the control module 302 may be configured to automatically generate a logo or a wording about the cheering team, actor/actress, director, or the like. The automatically generated logo or wording may be stored in the content storage module 304.

The alarm output module 306 may be configured to output the high-temperature alarm and the room-temperature alarm received from the display device 200. The user may know that the temperature of the battery 210 is abnormally high or overheats through the output of the high-temperature alarm. Therefore, it is possible to prevent the bag/cap 100 from being burned at high temperature by the overheating.

If the high-temperature alarm is received, the control module 302 may be configured to stop the transmission or mirroring of the contents. Further, if the room-temperature alarm is received, the control module 302 may be configured to resume the transmission or mirroring of the contents.

The GPS position information display module 307 may be configured to display the GPS position information received from the user terminal 200. The GPS position information display module 307 may be configured to confirm its position when the bag/cap 100 or the display device 200 is lost.

The mirroring module 308 may be configured to mirror the information displayed on the display panel of the user terminal 300 through the touch input display 208 of the display device 200. The mirroring module 308 may be configured to receive a touch input instruction input on the touch input display 208 to execute the touch input instruction as it is.

The wireless charging device 400 may be configured to supply the wireless power to the display device 200.

The image server 500 is a server configured to store various images. The image server 500 may also store digital contents such as images directly uploaded by the user and store various digital contents provided by a portal site or a YouTube.

The user terminal 300 may be configured to receive the digital contents of the image server 500 to store the digital contents in the content storage module 304, and to transmit and display the digital contents to and on the display device 200. Further, the user terminal 300 reads only digital content information of the image server 500 and then transmits this information to the display device 200, such that the display device 200 may directly download and display the digital contents in the image server 500 through the mobile communication module 214.

An advertisement content server 600 is a server configured to store and provide the advertisement contents to the user terminal 300 or the display device 200. The user terminal 300 may be configured to receive various advertisement contents from the advertisement content server 600 to store them in the content storage module 304, and to transmit and display the advertisement contents to and on the display device 200. Further, the user terminal 300 reads only advertisement content information of the advertisement content server 600 to transmit this information to the display device 200, such that the display device 200 may directly download and display the advertisement contents in the advertisement content server 600 through the mobile communication module 214.

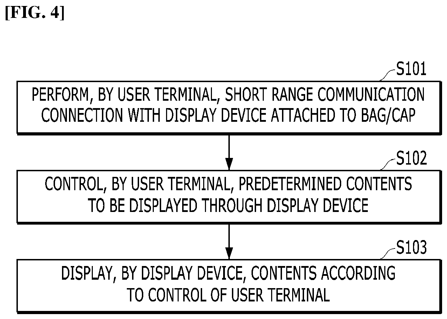

FIG. 4 is a flowchart of a method for the garment or fashion item attachment display according to the exemplary embodiment of the present disclosure.

Referring to FIG. 4, the user terminal 300 performs a short range communication connection with the display device 200 attached to the bag/cap 100 (S101).

Then, the user terminal 300 controls predetermined contents to be displayed through the display device 200 (S102).

Here, the contents may be still images or moving images.

Then, the display device 200 displays the contents according to the control of the user terminal 300 (S103).

Although the present disclosure has been described above with reference to the exemplary embodiment, it may be understood that the present disclosure may be variously modified and changed by those skilled in the art without departing from the spirit and scope of the present disclosure described in the appended claims.

### [Industrial Applicability]

The present disclosure relates to a system and a method for a garment or fashion item attachment display, and may be applied to manufacturing, distribution, and advertisement industrial fields of a garment and a fashion item.

## Claims

1. A system for a garment or fashion item attachment display comprising:
a display device attached to a garment or a fashion item; and
a user terminal configured to perform short range communication with the display device, and to control predetermined digital contents to be displayed through the display device,
wherein the garment or the fashion item comprises clothes, bags, caps, shoes, and ornaments, and
wherein the digital contents comprise images (videos included), design patterns, patterns, and wordings.

2. The system for the garment or fashion item attachment display of claim 1,
wherein the user terminal controls still images or moving images to be displayed through the display device.

3. A method for a garment or fashion item attachment display, the method comprising:
performing, by a user terminal, short range communication with a display device attached to a garment or a fashion item;
controlling, by the user terminal, predetermined digital contents to be displayed through the display device; and
displaying, by the display device, the digital contents according to a control of the user terminal.

4. The method for the garment or fashion item attachment display of claim 3, wherein the digital contents are still images or moving images.
